# FASCICULE DE BREVET EUROPEEN

(11) **EP 1 548 195 B1**
(45) Date de publication et mention de la délivrance du brevet: **27.06.2007**
(21) Numéro de dépôt: 04300907.5
(22) Date de dépôt: 16.12.2004
(51) Int. Cl.: E03F 7/10

(54) **Procédé permettant d'empêcher la formation d'une atmosphère insalubre et/ou explosive dans l'environnement d'une citerne ainsi que dispositif permettant la mise en oeuvre de ce procédé**
Verfahren und vorrichtung zum Vermeiden einer ungesunden und/oer explosiven Atmosphäre in der Umgebung eines Flüssigkeitstanks
Device and method for preventing the formation of an unhealthy and/or explosive atmosphere in the vicinity of a liquid tank

(30) Priorité: 24.12.2003 FR 0315362
(43) Date de publication de la demande: 29.06.2005
(73) Titulaire: Rivard, 49640 Daumeray (FR)
(72) Inventeur: Ollivier, Michel, 49220 Brain/Longuenée (FR); Lac, Jean-Pierre, 69001 Lyon (FR)
(74) Mandataire: Livet, Marie-José

(56) Documents cités:
- CA-A- 2 239 628
- DE-A1- 2 511 334
- FR-A- 2 839 493
- US-A- 6 013 138

## Description

La présente invention concerne un dispositif et un procédé associé permettant d'empêcher la formation d'une atmosphère insalubre et/ou explosive dans l'environnement immédiat d'une citerne à déchets dangereux portée par un véhicule tracteur, lors de la mise en oeuvre de cette citerne.

Il est fréquent de transporter dans des citernes à fond ouvrant des marchandises dangereuses, en particulier des liquides, le cas échéant toxiques ou corrosifs, volatils c'est-à-dire dont la tension de vapeur et le point éclair font qu'ils dégagent des vapeurs et gaz qui présentent la particularité d'être combustibles, donc de risquer de s'enflammer ou éventuellement d'exploser lorsqu'ils sont mélangés à de l'air, de l'oxygène, ou un gaz comburant autre en proportion convenable, en présence d'une source d'ignition.

Ces citernes qui peuvent être fixes ou démontables sont munies d'accessoires particuliers adaptés pour faciliter le chargement et le déchargement des déchets.

On entend par citerne fixe une citerne d'une capacité supérieure à 1000 litres fixée à demeure sur un véhicule citerne ou faisant partie intégrante du châssis d'un tel véhicule.

De telles citernes sont classiquement équipées d'un circuit de pompage dans lequel est montée une vanne d'isolement ainsi qu'une pompe à vide tournant toujours dans le même sens et associée à un système de vannes de sélection conçu de façon à lui permettre de fonctionner soit selon un mode d'aspiration dans lequel elle aspire le ciel gazeux de la citerne et rejette les gaz aspirés à l'atmosphère par une tubulure d'évacuation, soit selon un mode de refoulement dans lequel elle aspire de l'air extérieur pour le refouler dans le circuit de pompage et dans la citerne, en particulier de façon à accélérer et/ou faciliter la vidange de celle-ci en créant une pression à la surface du liquide qui y est contenu.

Les citernes de ce type sont en outre classiquement équipées d'organes de remplissage et de vidange de déchets, d'un trou d'homme, d'une vanne de mise à l'air libre et d'organes de manoeuvre internes susceptibles de générer, en cas de dysfonctionnement, des étincelles de nature à enflammer une atmosphère explosive par friction, choc ou abrasion.

Il est à noter que les organes de manoeuvre internes susceptibles de générer une étincelle peuvent être des organes électriques mécaniques, hydrauliques ou pneumatiques pouvant être situés à l'intérieur des compartiments de la citerne, dans les accessoires de remplissage et de vidange ou dans les tuyauteries de récupération des vapeurs. Ces organes peuvent être des organes de régulation, d'obturation, de cloisonnement...

Il est également à noter que l'ouverture du fond arrière peut également, dans certains cas particuliers, générer une atmosphère explosive dans l'environnement immédiat de la citerne, pouvant ainsi créer de graves désordres, voire une explosion compte tenu d'une part du contact des gaz ou vapeurs ainsi émis avec des organes pouvant générer une étincelle, et d'autre part du contact de ces mêmes gaz ou vapeurs, entraînés par l'air ambiant, avec les organes thermiques du véhicule porteur ou toute autre source extérieure présentant un point chaud.

Compte tenu de cette situation, les matériels du type susmentionné doivent satisfaire à des normes très sévères qui ont été établies par l'Administration, et les fabricants doivent prendre des mesures pour éviter une concentration dangereuse de mélanges explosifs, empêcher l'inflammation d'atmosphères explosives, et minimiser les conséquences de l'explosion si elle se produit, pour qu'elle n'ait pas d'effet dangereux sur le milieu environnant.

Pour quantifier les risques encourus, les spécialistes ont pris l'habitude de définir la notion de limite d'explosivité d'un gaz ou d'une vapeur dans l'air : il n'existe en effet qu'une plage limitée de concentration, spécifique à chaque gaz ou vapeur, susceptible de produire un mélange combustible.

La limite supérieure de cette plage est appelée limite supérieure d'explosivité (LSE) tandis que la limite inférieure de cette plage est appelée limite inférieure d'explosivité (LIE).

Si la concentration d'un gaz combustible ou explosif est inférieure à la LIE il n'y a pas assez de gaz pour produire une explosion (le mélange est trop pauvre) alors qu'à des concentrations supérieures à la LSE, le mélange comporte insuffisamment d'oxygène pour brûler (il est alors trop riche).

L'inflammabilité n'existe donc que dans la plage comprise entre la LIE et la LSE, pour chaque gaz ou mélange de gaz spécifique, et en dehors de ces limites, le mélange est incapable de combustion.

Par ailleurs, l'atmosphère insalubre présente dans l'environnement immédiat du véhicule est également quantifiée par les spécialistes et notamment la médecine du travail par les valeurs limites d'exposition professionnelle : VME et VLE.
- La VME (valeur limite de moyenne d'exposition) destinée à protéger les travailleurs des effets à terme, est mesurée
ou estimée sur la durée d'un poste de travail de 8 heures.
La VME peut être dépassée sur de courtes périodes, sous réserve de ne pas dépasser la VLE, lorsqu'elle existe.
- La VLE (valeur limite d'exposition), dont le respect permet d'éviter le risque d'effets toxiques immédiats ou à court terme est une valeur plafond mesurée sur une durée maximale de 15 minutes, en fonction de la nature du risque, des conditions de travail et des possibilités techniques de mesurage.

Les valeurs de VME et VLE de nombreuses substances chimiques sont éditées par 1'INRS dans ses cahiers de notes documentaires, hygiène et sécurité de travail, notamment le cahier référencé ND 2098-174-99.

On a ainsi défini différentes zones à risque d'explosion, en particulier la zone 0 dans laquelle l'atmosphère explosive est présente en permanence, la zone 1 dans laquelle l'atmosphère explosive est susceptible de se présenter occasionnellement en fonctionnement normal et la zone 2 dans laquelle l'atmosphère explosive n'est pas susceptible de se présenter en fonctionnement normal ou n'est que de courte durée, s'il advient qu'elle se présente néanmoins.

Pour minimiser le danger auquel peut être exposé le personnel affecté aux opérations nécessaires au fonctionnement des citernes à déchets opérant sous vide, ainsi que toutes les personnes susceptibles de se trouver aux abords ou dans la sphère d'influence des gaz pouvant être émis suite à l'opération de ces citernes et également l'environnement, on a conçu conformément à l'invention une citerne à déchets dangereux opérant sous vide, empêchant la formation d'une atmosphère insalubre et/ou explosive dans l'environnement immédiat du véhicule dans toutes les configurations de travail.

Dans ce contexte, l'invention concerne un dispositif permettant d'empêcher la formation d'une atmosphère insalubre et/ou explosive dans l'environnement immédiat d'une citerne à déchets dangereux opérant sous vide lors de la mise en oeuvre de cette citerne pour contenir toutes les émanations de façon à permettre d'arriver à la suppression de la LIE et au respect des VLE et VME.

Un tel dispositif comprend une citerne portée par un véhicule tracteur et équipée d'un fond ouvrant, d'organes de remplissage et de vidange, d'un trou d'homme et d'une vanne de mise à l'air libre ainsi que d'un circuit de pompage dans lequel est montée une pompe à vide tournant toujours dans le même sens et associée à une vanne d'isolement de la citerne et à un ensemble de vannes de sélection de façon à lui permettre de fonctionner soit selon un mode d'aspiration dans lequel elle aspire le ciel gazeux de la citerne et rejette les gaz aspirés à l'atmosphère par une tubulure d'évacuation, soit selon un mode de refoulement dans lequel elle aspire de l'air extérieur pour le refouler dans le circuit de pompage et dans la citerne, en particulier de façon à accélérer et/ou faciliter la vidange de celle-ci en créant une pression à la surface du liquide qui y est contenu.

Un dispositif de ce type était à titre d'exemple déjà décrit dans le document FR-A-2 839 493.

Selon l'invention, un tel dispositif est caractérisé en ce que :
- la pompe à vide est une pompe à anneau liquide associée à un circuit de circulation de liquide de pompe renfermant un refroidisseur ainsi qu'une cuve à anneau liquide branchée à sa partie supérieure sur le circuit de pompage de façon à permettre une séparation du liquide de pompe et des gaz circulant dans ce circuit, et
- le circuit de pompage est réalisé de sorte qu'il soit totalement étanche vis à vis de l'extérieur à l'air à une pression relative de l'ordre de 0,65 bar, sauf au niveau de l'ouverture externe de la tubulure d'évacuation, et est équipé d'une part d'une soupape de surpression montée en dérivation directement en aval de la cuve à anneau liquide et susceptible de s'ouvrir automatiquement en cas de surpression de sorte que les gaz passant au travers de celle-ci en mode de refoulement soit réaspirés par la pompe, et d'autre part d'une vanne casse vide montée en dérivation et susceptible de s'ouvrir avec la vanne d'isolement à la demande de l'opérateur pour évacuer les gaz présents dans la citerne vers la tubulure d'évacuation lorsque la pression dans celle-ci est supérieure à la pression atmosphérique.

Cette étanchéité au niveau du circuit de pompage doit bien entendu s'accompagner de la plus stricte étanchéité au niveau de la citerne elle-même.

Il va en effet de soi que le fonctionnement normal d'un véhicule citerne doit s'effectuer sans fuite, et, qu'à contrario un véhicule citerne qui fuit n'est plus apte à travailler.

La présence de la soupape de surpression permet de garantir l'étanchéité du circuit de pompage lorsqu'il travaille en mode de refoulement vu que le flux sortant par la soupape de surpression est entièrement réaspiré par la pompe et tourne en quelque sorte « en rond ».

La présence de la vanne casse vide permet de garantir également l'étanchéité du circuit de pompage lorsque la citerne est totalement fermée.

Selon l'invention, il est par ailleurs avantageux d'équiper le dispositif d'un capteur coopérant avec le trou d'homme de la citerne pour déclencher une alarme en cas d'ouverture de ce dernier lorsque le moteur du véhicule tracteur n'est pas arrêté.

Les organes de remplissage et de vidange de la citerne renferment en règle générale une tuyauterie de remplissage par le haut adaptée à un mode de transport pneumatique des déchets et utilisable uniquement pour remplir la citerne.

Selon une autre caractéristique de l'invention, cette tuyauterie qui plonge dans la citerne est revêtue sur toute la longueur d'un revêtement en un matériau antistatique souple de manière d'une part à permettre la continuité électrique et d'autre part à empêcher la formation d'étincelles.

Il est à noter que les accessoires classiques de cette tuyauterie de remplissage par le haut (coude, vanne spécifique, tube plongeur, séparateur biphasique, tube d'injection, clapet et brise-jet) sont également revêtus de matériau anti statique souple.

Selon une autre caractéristique de l'invention la tubulure d'évacuation est montée sur un bras mu hydrauliquement.

La présence de ce bras permet d'une part, le raccordement en toute sécurité, par un opérateur debout au niveau du sol d'un flexible complémentaire nécessaire pour la canalisation des gaz lourds à distance du véhicule, et d'autre part l'évacuation des gaz plus légers que l'air au point haut du véhicule, ce sans flexible complémentaire.

L'invention concerne également le procédé mis en oeuvre lors de l'utilisation du dispositif susmentionné.

Selon ce procédé, on contrôle l'étanchéité du circuit de pompage avec de l'air à une pression relative de l'ordre de 0,65 bars ce qui correspond à 1,3 fois la pression de refoulement autorisée qui est égale à 0,5 bars.

Selon une caractéristique préférentielle de ce procédé, lorsque le circuit de pompage travaille en mode d'aspiration, donc que des gaz aspirés sont rejetés à l'atmosphère par la tubulure d'évacuation on choisit le lieu et la direction de rejet de ces gaz en fonction de leurs caractéristiques et de l'environnement, et le cas échéant, on équipe la tubulure d'évacuation d'un jeu de flexibles de façon à garantir une distance minimum entre la zone de rejet et la citerne et le véhicule tracteur.

Avant toute opération d'aspiration, il est ainsi demandé à l'opérateur de choisir d'évacuer les gaz rejetés soit vers le haut, soit vers le bas hors de l'environnement immédiat du véhicule, auquel cas, la tubulure d'évacuation qui est en règle générale constituée par un bras d'évacuation doit être raccordée à des tronçons de flexibles pouvant avoir une longueur de plusieurs mètres.

Cette caractéristique permet donc à l'opérateur de refouler des gaz plus légers que l'air au point haut du véhicule, et des gaz plus lourds que l'air au niveau du sol, à distance du véhicule tracteur grâce au jeu de flexibles.

Dans le cas d'un rejet en position basse, on peut avantageusement équiper la citerne d'un dispositif sécurisé d'éloignement garantissant unie distance minimale par rapport au hors tout carrossé de l'ensemble véhicule/tracteur citerne.

Il est à noter que les organes de remplissage et de vidange de la citerne renferment en règle générale d'une part une vanne de vidange située à la partie inférieure de la citerne au niveau du fond ouvrant de celle-ci et reliée à une tuyauterie de remplissage par le bas permettant un pompage sous vide des déchets, et d'autre part une vanne de remplissage située à la partie supérieure de la citerne et reliée à une tuyauterie de remplissage par le haut adaptée à un mode de transport pneumatique par le haut des déchets avec déversement au point bas.

Or, lors de la mise en oeuvre d'une telle opération de remplissage, le ciel gazeux de celle-ci doit être évacué par une tubulure d'évacuation à l'air libre, et il existe donc également à ce niveau un risque de formation d'une atmosphère insalubre et/ou explosive.

Pour cette raison, et selon une autre caractéristique de l'invention, lorsque la citerne est remplie on raccorde la tubulure d'évacuation à un jeu de flexibles de façon à garantir une distance minimum entre la zone de rejet de la citerne et le véhicule tracteur lorsque l'on utilise un mode de remplissage autre que la pompe à vide installée sur ce dernier.

Selon une autre caractéristique de l'invention, après chaque arrêt de la pompe à vide en mode d'aspiration ou en mode de refoulement, on effectue une ventilation du circuit de pompage suite à la mise en oeuvre de la pompe à vide.

A cet effet, ce circuit est équipé d'une vanne de ventilation placée directement en aval de la vanne d'isolement équipant la citerne.

Pour garantir la sécurité des utilisateurs, il est parallèlement nécessaire d'effectuer une ventilation de la citerne avant d'ouvrir le fond de celle-ci pour mettre en oeuvre une opération de dépotage des boues présentes à sa partie interne, ce de façon à exclure la formation d'une atmosphère insalubre et/ou explosive.

Cette ventilation s'effectue suite à la mise en oeuvre de la pompe à vide en mode d'aspiration, l'air extérieur étant alors aspiré à la partie interne de la citerne au niveau de la vanne de mise à l'air libre pour ressortir vers l'extérieur par la tubulure d'évacuation du circuit de pompage.

Lors de cette opération, l'air aspiré par la pompe à vide, se charge en composés organiques volatils à la partie interne de la citerne avant de ressortir de celle-ci par la vanne d'isolement et d'être rejeté vers l'extérieur par la tubulure d'évacuation.

Après déverrouillage et ouverture du fond ouvrant, il se crée une ouverture annulaire par laquelle l'air extérieur pénètre dans la citerne avant de ressortir, chargé en composés organiques volatils, par la vanne d'isolement et d'être rejeté vers l'extérieur par la tubulure d'évacuation.

L'opération de ventilation de la citerne s'effectue donc ainsi en deux étapes.

La durée de la première de ces étapes est de préférence réglée de façon à garantir que l'ouverture du fond ne puisse être effectuée avant que la concentration des gaz dans celle-ci soit inférieure à 25 % de la LIE.

Selon l'invention, lors de l'opération de dépotage des boues présentes à la partie interne de la citerne, il est par ailleurs avantageux de repousser les gaz générés par les produits dépotés grâce à un système de ventilation artificielle commandé par le moteur du véhicule tracteur et ne comportant aucune source d'inflammation d'ordre mécanique électrique
ou pneumatique.

Un tel système de ventilation artificielle qui est en règle générale constitué par une buse amplificatrice d'air sans aucun système électrique et mécanique permet par ailleurs d'éviter toute interférence avec des sources potentielles d'inflammation.

Les caractéristiques du procédé ainsi que du dispositif qui font l'objet de l'invention seront décrites plus en détail en se référant aux dessins non limitatifs annexés dans lesquels :
- la figure 1 représente la citerne et le véhicule tracteur lors de la mise en oeuvre d'une opération de dépotage ;
- la figure 2 est un schéma représentatif du fonctionnement du dispositif en mode d'aspiration ;
- la figure 3 est un schéma identique à la figure 2 mais représentant le dispositif en mode de refoulement.

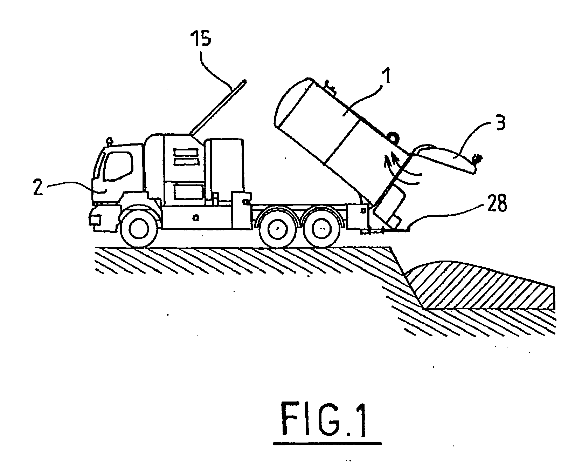

Selon la figure 1, la citerne à déchets dangereux opérant sous vide 1 est portée par un véhicule tracteur 2 susceptible de se déplacer sur une chaussée.

La citerne 1 est équipée d'un fond ouvrant 3 et peut être basculée de façon à permettre d'effectuer une opération de dépotage des boues renfermées à sa partie interne.

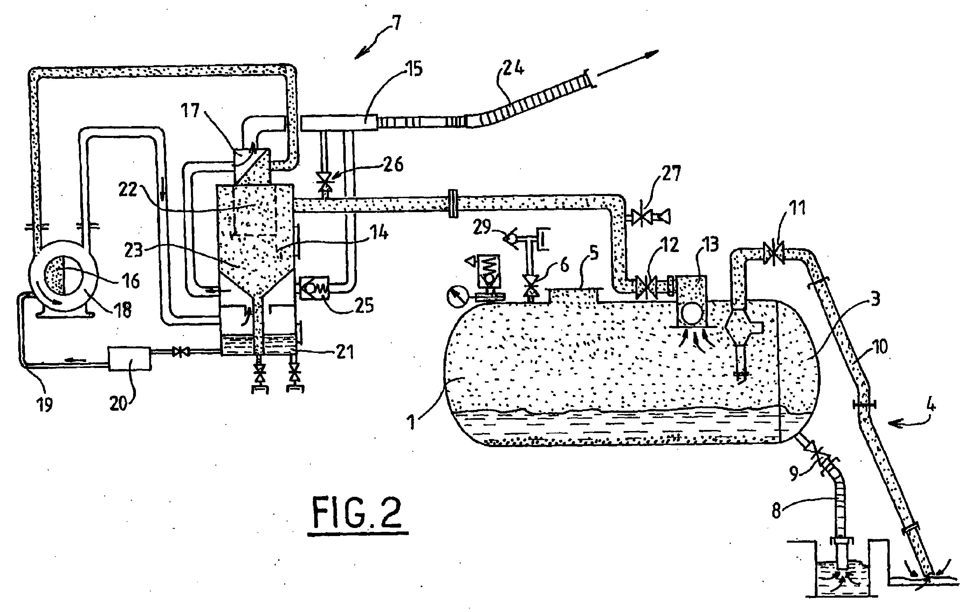

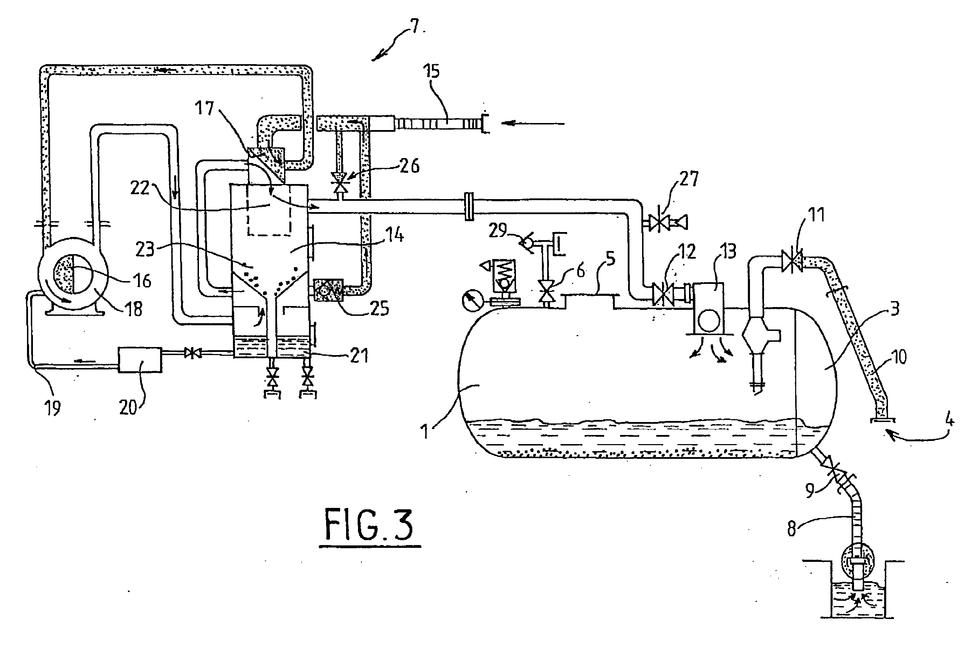

Selon les figures 2 et 3, la citerne 1 est équipée, outre le fond ouvrant 3 d'organes de remplissage et de vidange 4 d'un trou d'homme 5 d'une vanne de mise à l'air libre 6 ainsi que d'un circuit de pompage portant la référence générale 7 qui sera décrit plus en détail dans la suite de cet exposé.

Les organes de remplissage et de vidange 4 de la cuve 1 comportent principalement une tuyauterie de remplissage par le bas 8 montée à la partie inférieure de la citerne 1 et équipée d'une vanne de vidange 9, et une tuyauterie de remplissage par le haut 10 plongeant dans la citerne 1 à son extrémité aval et équipée directement en amont de cette extrémité d'une vanne de remplissage située à la partie supérieure de la citerne 1.

La tuyauterie de remplissage par le bas 8 permet le pompage sous vide des déchets et leur refoulement vers l'extérieur tandis que la tuyauterie de remplissage par le haut 10 a pour seule fonction de permettre un transport pneumatique par le haut des déchets avec déversement au point bas.

Selon les figures 2 et 3, le circuit de pompage 7 est principalement équipé d'une vanne d'isolement 12 associée à un support à boule 13 et montée directement à la partie supérieure de la citerne 1, d'éléments de filtration 14, d'une tubulure d'évacuation 15 ainsi que d'une pompe à vide 16 tournant toujours dans le même sens.

Les organes de filti-ation 14 sont plus précisément constitués par l'association d'une part d'un filtre particulier dit « basket filtrer » 22 permettant de débarrasser les gaz circulant dans le circuit de pompage 7 des impuretés légères et d'autre part d'un cyclone 23 ayant pour fonction de permettre la séparation des impuretés lourdes.

La pompe à vide 16 est quant à elle associée à une vanne de sélection quatre voies 17 permettant au circuit de pompage 7 de fonctionner soit selon un mode d'aspiration représenté sur la figure 2 soit selon un mode de refoulement représenté sur la figure 3.

Plus précisément, et selon les figures 2 et 3, la pompe à vide 16 est une pompe à anneau liquide 18 associée à un circuit de circulation 19 de liquide de pompe renfermant un refroidisseur 20 ainsi qu'une cuve à anneau liquide 21 branchée à sa partie supérieure sur le circuit de pompage 7 de façon à permettre une séparation du liquide de pompe et des gaz circulant dans ce circuit.

Selon la figure 2, lorsque le dispositif travaille en mode d'aspiration sous vide la tuyauterie de remplissage par le bas 8 est plongée dans le produit liquide à pomper.

La pression atmosphérique exerce une pression sur ce produit qui est ainsi poussé dans la tuyauterie 8 puis dans la citerne 1 lorsque cette dernière est en dépression.

Simultanément et comme indiqué par les flèches, le ciel gazeux de la citerne 1 est aspiré par la pompe 16 au travers du support de boule 13 et est débarrassé, au niveau des organes de filtration 14 d'une part des impuretés lourdes par effet cyclonique et d'autre part des impuretés légères au niveau du filtre 22.

Les gaz ainsi débarrassés des impuretés sont ensuite canalisés vers l'orifice d'aspiration de la pompe 16 par la vanne quatre voies 17 puis refoulés dans la cuve à anneau liquide 21 avec le liquide de refroidissement circulant dans le circuit de circulation de liquide.

Les gaz sortant de la cuve à anneau liquide 21 au niveau de laquelle ils ont été séparés du liquide de refroidissement sont ensuite éjectés au travers de la vanne 17 vers la tubulure d'évacuation 15 qui en fonction de la nature de ces gaz peut être équipée d'un flexible 24 de façon à permettre de les éloigner de la citerne 1 et du véhicule porteur 2.

Le liquide circulant dans le circuit de circulation de liquide 19 est quant à lui à nouveau aspiré par la pompe 16 au travers du refroidisseur 20.

Selon la figure 2, le circuit de pompage 7 est par ailleurs équipé d'une vanne casse vide 26 montée en dérivation en amont des organes de filtration 14 de la vanne 17 et de la pompe 16 et susceptible de s'ouvrir pour canaliser les gaz directement vers la tubulure d'évacuation 15 lorsque la pression dans la citerne 1 est supérieure à la pression atmosphérique.

D'une manière plus précise, lorsque la citerne est totalement fermée (c'est-à-dire que le fond 3 ainsi que les vannes 11, 9 et 6 sont fermées) il peut subsister à l'intérieur de celle-ci une pression supérieure à la pression atmosphérique pouvant être source d'une formation d'une atmosphère insalubre et/ou explosive dans l'environnement du véhicule 2 lors de l'ouverture d'un orifice tel que (trou d'homme, vanne, ...).

Pour éviter un tel phénomène :
- si la pression à l'intérieur de la citerne 1 est supérieure à la pression atmosphérique, les vannes 12 et 26 sont ouvertes et les gaz s'échappent par la tubulure d'évacuation 15.

Si la pression à l'intérieur de la citerne est inférieure à la pression atmosphérique, il est nécessaire avant d'ouvrir un orifice tel que (trou d'homme, vanne, ...) de ramener la pression intérieure à une pression identique à la pression atmosphérique.

Pour ce faire, la vanne de mise à l'air libre 6 est ouverte et l'air rentre par un clapet anti retour 29 associé à cette vanne et qui a la particularité d'éviter toute sortie de gaz dans l'environnement immédiat du dispositif.

Par suite, la vanne de mise à l'air libre 6 peut s'ouvrir pour permettre de canaliser l'évacuation des gaz lors d'une opération de remplissage de la citerne 1 par un autre mode de remplissage que celui installé sur le véhicule mais également pour laisser pénétrer l'air dans celle-ci par le clapet anti retour 29.

Selon la figure 3, lorsque le dispositif travaille en mode de refoulement, l'air atmosphérique est aspiré au niveau de la tubulure d'évacuation 15 et est canalisé vers l'orifice d'aspiration de la pompe 16 par la vanne 17 comme indiqué par les flèches.

Cet air est ensuite refoulé dans la cuve à anneau liquide 21 avec le liquide de refroidissement circulant dans le circuit de circulation de liquide 19.

Au niveau de cette cuve 21 il se produit une séparation des phases liquides et gazeuses.

Le liquide est ensuite à nouveau aspiré par la pompe 16 au travers du refroidisseur 20.

Les gaz sont quant à eux refoulés dans la citerne 1 au travers de la vanne 17 et du filtre 22 de façon à accroître la pression à la surface du liquide contenu dans cette citerne et à augmenter la vitesse de vidange de cette dernière par la tubulure de remplissage par le bas 8.

Selon la figure 3, le circuit de pompage 7 est également équipé d'une soupape de surpression 25 montée en dérivation directement en aval de la cuve à anneau liquide 21 et susceptible de s'ouvrir automatiquement en cas de surpression pour canaliser les gaz vers l'orifice d'aspiration de la pompe 16 de sorte qu'ils « tournent en rond ».

Selon les figures 2 et 3, le circuit de pompage 7 est de plus équipé d'une vanne de ventilation 27 permettant sa ventilation après toute utilisation de la pompe 16 que ce soit en mode d'aspiration ou en mode de refoulement.

Par ailleurs et selon la figure 1, le véhicule porteur 2 est équipé d'un système de ventilation artificielle 28 commandé par le moteur du véhicule tracteur 2 de façon à repousser les gaz générés par les produits dépotés lors de l'opération de dépotage des boues présentes à la partie interne de la citerne 1.

## Revendications

1. Dispositif permettant d'empêcher la formation d'une atmosphère insalubre et/ou explosive dans l'environnement immédiat d'une citerne à déchets dangereux opérant sous vide lors de la mise en oeuvre de cette citerne comprenant une citerne (1) portée par un véhicule tracteur (2) et équipée d'un fond ouvrant (3), d'organes de remplissage et de vidange (4), d'un trou d'homme (5), d'une vanne de mise à l'air libre (6) ainsi que d'un circuit de pompage (7) dans lequel est montée une pompe à vide (16) tournant toujours dans le même sens et associée à une vanne d'isolement (12) et à un ensemble de vannes de sélection de façon à lui permettre de fonctionner soit selon un mode d'aspiration dans lequel elle aspire le ciel gazeux de la citerne (1) et rejette les gaz aspirés à l'atmosphère par une tubulure d'évacuation (15), soit selon un mode de refoulement dans lequel elle aspire de l'air extérieur pour le refouler dans le circuit de pompage (7) et dans la citerne (1), en particulier de façon à accélérer et/ou faciliter la vidange de celle-ci en créant une pression à la surface du liquide qui y est contenu,
**caractérisé en ce que**
- la pompe à vide (16) est une pompe à anneau liquide (18) associée à un circuit de circulation de liquide de pompe (19) renfermant un refroidisseur (20) ainsi qu'une cuve à anneau liquide (21) branchée à sa partie supérieure sur le circuit de pompage (7) de façon à permettre une séparation du liquide de pompe et des gaz circulant dans ce circuit, et
- le circuit de pompage (7) est réalisé de sorte qu'il soit totalement étanche vis à vis de l'extérieur à l'air à une pression relative de l'ordre de 0,65 bar, sauf au niveau de l'ouverture externe de la tubulure d'évacuation (15), et est équipé d'une part d'une soupape de surpression (25) montée en dérivation directement en aval de la cuve à anneau liquide (21) et susceptible de s'ouvrir automatiquement en cas de surpression de sorte que les gaz passant au travers de celle-ci en mode de refoulement soit réaspirés par la pompe (16), et d'autre part d'une vanne casse vide (26) montée en dérivation et susceptible de s'ouvrir avec la vanne d'isolement (12) à la demande de l'opérateur pour évacuer les gaz présents dans la citerne (1) vers la tubulure d'évacuation (15) lorsque la pression dans celle-ci est supérieure à la pression atmosphérique.

2. Dispositif selon la revendication 1,
**caractérisé en ce qu'**
il comporte un capteur coopérant avec le trou d'homme (5) de la citerne (1) pour déclencher une alarme en cas d'ouverture de ce dernier lorsque le moteur du véhicule tracteur (2) n'est pas arrêté.

3. Dispositif selon l'une quelconque des revendications 1 et 2,
**caractérisé en ce que**
les organes de remplissage et de vidange (4) renferment une tuyauterie de remplissage (10) par le haut adaptée à un mode de transport pneumatique des déchets, cette tuyauterie (10) plongeant dans la citerne (1) et étant revêtue sur toute sa longueur d'un revêtement en un matériau anti statique souple de manière d'une part à permettre la continuité électrique et d'autre par à empêcher la formation d'étincelles.

4. Dispositif selon l'une quelconque des revendications 1 à 3,
**caractérisé en ce que**
la tubulure d'évacuation (15) est montée sur un bras mu hydrauliquement.

5. Procédé mis en oeuvre lors de l'utilisation du dispositif selon l'une quelconque des revendications 1 à 4,
**caractérisé en ce que**
l'on contrôle l'étanchéité du circuit de pompage (7) avec de l'air à une pression relative de l'ordre de 0,65 bars.

6. Procédé selon la revendication 5,
**caractérisé en ce que**
lorsque le circuit de pompage (7) travaille en mode d'aspiration, on choisit le lieu et la direction de rejet des gaz aspirés en fonction des caractéristiques de ces gaz et de l'environnement, et le cas échéant on équipe la tubulure d'évacuation (15) d'un jeu de flexibles (24) de façon à garantir une distance minimum entre la zone de rejet et la citerne (1) et le véhicule tracteur (2).

7. Procédé selon l'une quelconque des revendications 5 et 6,
**caractérisé en ce qu'**
on raccorde la tubulure d'évacuation (15) à un jeu de flexibles de façon à garantir une distance minimum entre la zone de rejet et la citerne (1) et le véhicule tracteur (2) lorsque l'on utilise un mode de remplissage autre que la pompe à vide installée sur ce dernier.

8. Procédé selon l'une quelconque des revendications 5 à 7,
**caractérisé en ce que**
après chaque arrêt de la pompe à vide (16) en mode d'aspiration ou en mode de refoulement, on effectue une ventilation du circuit de pompage (7), suite à la mise en oeuvre de la pompe à vide (16).

9. Procédé selon l'une quelconque des revendications 5 à 8,
**caractérisé en ce que**
avant d'ouvrir le fond (3) de la citerne (1) pour mettre en oeuvre une opération de dépotage des boues contenues dans celle-ci, on effectue une ventilation de la partie interne de la citerne (1) suite à la mise en oeuvre de la pompe à vide (16) en mode d'aspiration de façon à exclure la formation d'une atmosphère insalubre et/ou explosive dans l'environnement immédiat du fond (3) de la citerne (1) lors de son ouverture, la ventilation de la partie interne de la citerne (1) étant permanente durant le déverrouillage, l'ouverture du fond (3), le dépotage et jusqu'au verrouillage du fond (3) après fermeture de celui-ci.

10. Procédé selon la revendication 9,
**caractérisé en ce que**
lors de l'opération de dépotage des boues présentes à la partie interne de la citerne (1) on repousse les gaz générés par les produits dépotés grâce à un système de ventilation artificielle (28) commandé par le moteur du véhicule tracteur (2), et ne comportant aucune source d'inflammation d'ordre mécanique, électrique ou pneumatique.

## Claims

1. Device permitting prevention of the formation of an unhealthy and/or explosive atmosphere in the immediate environment of a dangerous-waste tank operating *in vacuo* during operation of the tank, comprising a tank (1) carried by a traction vehicle (2) and equipped with an opening end (3), with filling and emptying members (4), with a manhole (5), with an aerating valve (6) and also with a pumping circuit (7) in which there is mounted a vacuum pump (16) that always rotates in the same direction and that is associated with an isolating valve (12) and with a set of selection valves, so that it is able to operate either in aspirating mode, in which it aspirates the gaseous mantle of the tank (1) and discharges the aspirated gases to the atmosphere through an evacuation pipe (15), or in reverse-flow mode, in which it aspirates air from the outside and pumps it into the pumping circuit (7) and into the tank (1), in particular so as to accelerate and/or facilitate emptying thereof by creating a pressure on the surface of the liquid contained therein,
**characterised in that**
- the vacuum pump (16) is a liquid ring pump (18) associated with a circuit (19) for circulating pumping liquid, which circuit (19) comprises a cooler (20) and a liquid ring vessel (21) connected in its upper portion to the pumping circuit (7) so as to permit separation of the pumping liquid and the gases circulating in the circuit, and
- the pumping circuit (7) is in such a form that it is totally tight with respect to the outside in air at a relative pressure of the order of 0.65 bar, except in the region of the outside opening of the evacuation pipe (15), and is equipped on the one hand with a pressure control valve (25), which is connected in parallel directly downstream of the liquid ring vessel (21) and is capable of opening automatically in case of excess pressure, so that the gases passing through it in reverse-flow mode are re-aspirated by the pump (16), and on the other hand with a vacuum breaker valve (26), which is connected in parallel and is capable of opening with the isolating valve (12) at the request of the operator in order to evacuate the gases present in the tank (1) to the evacuation pipe (15) when the pressure in the tank (1) is greater than atmospheric pressure.

2. Device according to claim 1,
**characterised in that**
it comprises a sensor which cooperates with the manhole (5) of the tank (1) in order to trigger an alarm if the tank (1) is opened when the engine of the traction vehicle (2) is not stopped.

3. Device according to either claim 1 or claim 2,
**characterised in that**
the filling and emptying members (4) comprise a filling pipe (10) for filling through the top, which is suitable for a pneumatic mode of transportation of the waste, the pipe (10) being immersed in the tank (1) and being covered over its entire length by a covering of a flexible antistatic material in order on the one hand to permit electrical continuity and on the other hand to prevent the formation of sparks.

4. Device according to any one of claims 1 to 3,
**characterised in that**
the evacuation pipe (15) is mounted on an arm that is moved hydraulically.

5. Method carried out when the device according to any one of claims 1 to 4 is used,
**characterised in that**
the tightness of the pumping circuit (7) is controlled with air at a relative pressure of the order of 0.65 bar.

6. Method according to claim 5,
**characterised in that**
when the pumping circuit (7) is working in aspirating mode, the place and direction in which the aspirated gases are discharged is chosen as a function of the characteristics of the gases and of the environment, and the evacuation pipe (15) is optionally equipped with a set of flexible joints (24) in order to ensure a minimum distance between the discharge zone and the tank (1) and the traction vehicle (2).

7. Method according to either claim 5 or claim 6,
**characterised in that**
the evacuation pipe (15) is connected to a set of flexible joints in order to ensure a minimum distance between the discharge zone and the tank (1) and the traction vehicle (2) when a means of filling other than the vacuum pump installed on the traction vehicle (2) is used.

8. Method according to any one of claims 5 to 7,
**characterised in that**
each time the vacuum pump (16) has been stopped, in aspirating mode or in reverse-flow mode, ventilation of the pumping circuit (7) is carried out following operation of the vacuum pump (16).

9. Method according to any one of claims 5 to 8,
**characterised in that**
before the end (3) of the tank (1) is opened for carrying out an operation of decanting the sludge contained therein, ventilation of the interior of the tank (1) is carried out following operation of the vacuum pump (16) in aspirating mode so as to rule out the formation of an unhealthy and/or explosive atmosphere in the immediate environment of the end (3) of the tank (1) when it is opened, ventilation of the interior of the tank (1) being permanent during unlocking and opening of the end (3) and during the decanting operation and until the end (3) has been locked after it has been closed.

10. Method according to claim 9,
**characterised in that**
during the operation of decanting the sludge present in the interior of the tank (1), the gases generated by the decanted products are pushed back by means of an artificial ventilation system (28) which is controlled by the engine of the traction vehicle (2) and does not include any mechanical, electrical or pneumatic inflammation source.

## Patentansprüche

1. Vorrichtung zur Verhinderung der Entstehung einer gesundheitsschädlichen und/oder explosiven Atmosphäre in der unmittelbaren Umgebung eines Behälters für gefährliche Abfälle, die bei der Benutzung dieses Behälters im Vakuum arbeitet und einen von einer Zugmaschine (2) getragenen Behälter (1) aufweist, der mit einer Klappe (3) am hinteren Ende, Mitteln (4) zum Befüllen und zum Entleeren, einer Einstiegsöffnung (5), einem Schieber (6) zum Einlassen von Umgebungsluft sowie einem Pumpenkreislauf (7) ausgestattet ist, in welchem eine Vakuumpumpe (16) eingebaut ist, die sich immer in der gleichen Richtung dreht und mit einem Trennschieber (12) und einer Gruppe auswählbarer Schieber verbunden ist, damit sie entweder in einem Ansaugmodus, in welchem sie die gashaltige Scheitelschicht des Behälters (1) ansaugt und die angesaugten Gase durch einen Entleerungsstutzen (15) in die Atmosphäre abgibt, oder in einem Fördermodus arbeiten kann, in dem sie Außenluft ansaugt, um sie in den Pumpenkreislauf (7) und in den Behälter zu fördern, insbesondere, um dessen Entleerung zu beschleunigen und/oder zu erleichtern, indem ein Druck auf die Oberfläche der darin enthaltenen Flüssigkeit erzeugt wird,
**dadurch gekennzeichnet, dass**
- die Vakuumpumpe (16) eine Flüssigkeitsringpumpe (18) ist, die mit einem Kreislauf mit umlaufender Pumpenflüssigkeit (19) verbunden ist, welcher eine Kühleinrichtung (20) sowie einen Flüssigkeitsring-Behälter (21) aufweist, der an seinem oberen Teil an den Pumpenkreislauf (7) angeschlossen ist, um eine Trennung der Pumpenflüssigkeit und der in diesem Kreislauf zirkulierenden Gase zu ermöglichen, und
- der Pumpenkreislauf (7) so ausgeführt ist, dass er, außer im Bereich der Außenöffnung des Entleerungsstutzens (15), gegenüber der Außenluft mit einem Relativdruck in der Größenordnung von 0,65 bar vollkommen dicht ist, und er einerseits mit einem Überdruckventil (25), das direkt unterhalb des Flüssigkeitsring-Behälters (21) abzweigend angeordnet ist und im Fall eines Überdrucks automatisch öffnen kann, so dass die im Fördermodus durch dieses hindurchgehenden Gase von der Pumpe (16) wieder angesaugt werden, und er andererseits mit einem abzweigend angeordneten Rückschlagventil gegen Vakuum (26) ausgestattet ist, das durch Veranlassung des Bedienungsmanns mit dem Trennschieber (12) öffnen kann, um die im Behälter (1) vorhandenen Gase zum Entleerungsstutzen (15) hin abzupumpen, wenn in diesem der Druck größer als der atmosphärische Druck ist.

2. Vorrichtung nach Anspruch 1, **dadurch gekennzeichnet, dass** sie einen mit der Einstiegsöffnung (5) des Behälters (1) zusammenarbeitenden Messfühler aufweist, um dann, wenn sie (5) geöffnet, aber der Motor der Zugmaschine (2) nicht abgestellt ist, einen Alarm auszulösen.

3. Vorrichtung nach einem der Ansprüche 1 und 2, **dadurch gekennzeichnet, dass** die Mittel zum Befüllen und Entleeren (4) eine nach oben gerichtete, an eine pneumatische Transportweise der Abfälle angepasste Befüll-Rohrleitung (10) umfasst, wobei diese Rohrleitung (10) in den Behälter (1) eintaucht und auf ihrer ganzen Länge mit einem Überzug aus einem antistatischen weichen Material überzogen ist, um einerseits den Stromfluss zu ermöglichen und andererseits das Entstehen von Funken zu verhindern.

4. Vorrichtung nach der Ansprüche 1 bis 3, **dadurch gekennzeichnet, dass** der Entleerungsstutzen (15) an einem hydraulisch angetriebenen Arm angeordnet ist.

5. Verfahren, durchzuführen bei der Benutzung einer Vorrichtung nach einem der Ansprüche 1 bis 4, **dadurch gekennzeichnet, dass** die Dichtheit des Pumpenkreislaufs (7) mit Luft mit einem relativen Druck in der Größenordnung von 0,65 bar geprüft wird.

6. Verfahren nach Anspruch 5, **dadurch gekennzeichnet, dass** dann, wenn der Pumpenkreislauf (7) im Ansaugmodus arbeitet, der Ort und die Richtung der Abgabe der angesaugten Gase in Abhängigkeit von den Eigenschaften dieser Gase und der Umgebung ausgewählt werden, und ggf. der Entleerungsstutzen (15) mit einer Gelenkgarnitur (24) ausgestattet wird, um eine Mindestdistanz zwischen dem Abgabebereich des Behälters (1) der Zugmaschine (2) zu gewährleisten.

7. Verfahren nach einem der Ansprüche 5 und 6, **dadurch gekennzeichnet, dass** der Entleerungsstutzen (15) mit einer Gelenkgarnitur verbunden ist, um einen Mindestabstand zwischen dem Abgabebereich und dem Behälter (1) und der Zugmaschine (2) zu gewährleisten, wenn als Befüllungsweise eine andere als die mit der auf letzterer installierten Vakuumpumpe benutzt wird.

8. Verfahren nach einem der Ansprüche 5 bis 7, **dadurch gekennzeichnet, dass** nach jedem Abstellen der Vakuumpumpe (16) im Ansaugmodus oder im Fördermodus der Pumpenkreislauf (7) durchgespült wird, nachdem die Vakuumpumpe (16) eingeschaltet worden ist.

9. Verfahren nach einem der Ansprüche 5 bis 8, **dadurch gekennzeichnet, dass** bevor der hintere Teil (3) des Behälters (1) geöffnet wird, um die darin enthaltenen Schmutzablagerungen zu entfernen, nach der Inbetriebnahme der Vakuumpumpe (16) im Ansaugmodus eine Spülung des inneren Teils des Behälters (1) durchgeführt wird, um in der unmittelbaren Umgebung des hinteren Teils (3) des Behälters (1), wenn dieser geöffnet wird, die Entstehung einer gesundheitsschädlichen und/oder explosiven Atmosphäre auszuschließen, wobei die Spülung des inneren Teils des Behälters (1) ununterbrochen während der Entriegelung, dem Öffnen des hinteren Teils (3), dem Entfernen der Ablagerungen und bis zum erneuten Verriegeln des hinteren Teils (3) nach dessen Schließen stattfindet.

10. Verfahren nach Anspruch 9, **dadurch gekennzeichnet, dass** beim Entfernen der im inneren Teil des Behälters (1) enthaltenen Ablagerungen die durch die abgelagerten Produkte erzeugten Gase mit Hilfe eines vom Motor der Zugmaschine (2) angetriebenen künstlichen Belüftungssystems (28) ausgetrieben werden, das nicht eine feuergefährliche Quelle mechanischer, elektrischer oder pneumatischer Art aufweist.
